Europäisches Patentamt

European Patent Office

Office européen des brevets

(11) Publication number: **0 165 020**
**B1**

# EUROPEAN PATENT SPECIFICATION

(45) Date of publication of patent specification: **11.10.89**

(51) Int. Cl.⁴: **H 02 P 7/628**

(21) Application number: **85304021.0**

(22) Date of filing: **06.06.85**

(54) Power converter for AC load.

(30) Priority: **11.06.84 JP 119519/84**
**11.06.84 JP 119520/84**

(43) Date of publication of application:
**18.12.85 Bulletin 85/51**

(45) Publication of the grant of the patent:
**11.10.89 Bulletin 89/41**

(84) Designated Contracting States:
**DE FR GB SE**

(56) References cited:
**DE-A-3 236 503**

**PATENT ABSTRACTS OF JAPAN, vol. 6, no. 123
(E-117)1001r, 8th July 1982; & JP - A - 57 49393
(TOKYO SHIBAURA DENKI) 23-03-1982**

**PATENT ABSTRACTS OF JAPAN, vol. 7, no. 214
(E-199)1359r, 21st September 1983; & JP - A -
58 107 088 (HITACHI SEISAKUSHO) 25-06-1983**

(73) Proprietor: **KABUSHIKI KAISHA TOSHIBA
72, Horikawa-cho Saiwai-ku
Kawasaki-shi Kanagawa-ken 210 (JP)**

(72) Inventor: **Saito, Suzuo c/o Patent Division
Toshiba Corporation Principal Office
1-1, Shibaura 1-chome Minato-ku Tokyo (JP)**

(74) Representative: **Kirk, Geoffrey Thomas et al
BATCHELLOR, KIRK & EYLES 2 Pear Tree Court
Farringdon Road
London EC1R 0DS (GB)**

Courier Press, Leamington Spa, England.

## EP 0 165 020 B1

**Description**

This invention relates to a power converter for driving an AC load, and more particularly to a power converter which is capable of ensuring the stable drive of an AC motor load even upon occurrence of an instantaneous power failure, hereinafter referred to as an instantaneous interruption, in the AC power to the converter.

Power converters of the type to which the invention relates are generally called voltage type inverters.

In this specification, an induction motor is taken as an example of a conventional AC motor to which AC power is supplied from the power converter.

The prior art will now be described with reference to Figures 1 to 5 of the accompanying drawings, in which:—

Figure 1 is a circuit diagram of a conventional power converter of the type to which the present invention relates;

Figure 2 is a diagram illustrating the construction of a conventional power converter;

Figure 3 is a timing chart illustrating the operation of the conventional power converter shown in Figure 2;

Figure 4 is torque-speed graphs of an induction motor fed by a conventional power converter; and

Figure 5 is a diagram illustrating a conventional power converter when a vector control is employed.

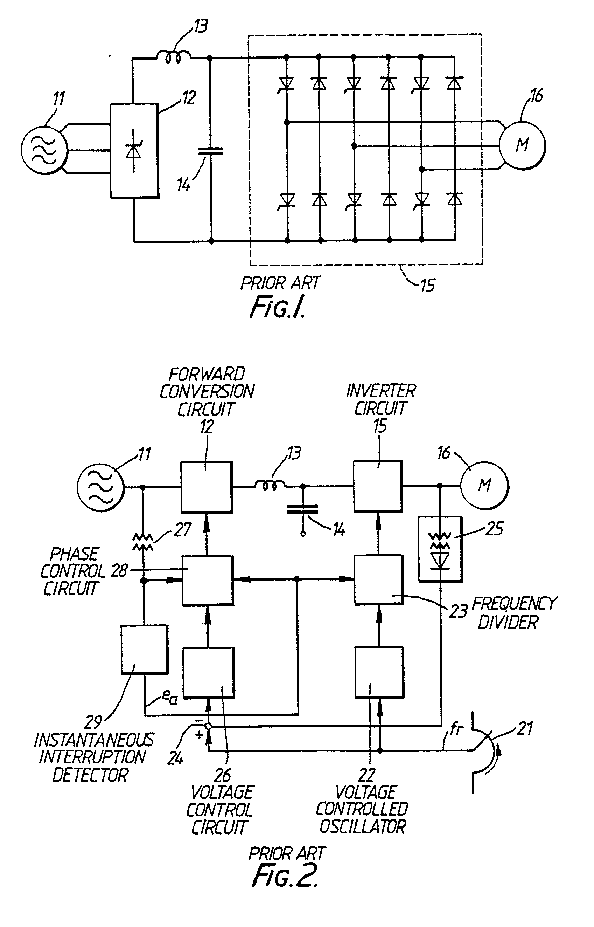

Referring to Figure 1, AC power of an input AC source 11 is converted into DC power by means of a rectifier circuit, and ripple components included within the thus converted DC power are eliminated by a DC reactor 13 and a smoothing capacitor 14. The thus smoothed DC power is again inversely converted into AC power, which generally differs from the original AC power in terms of frequency and voltage, by an inverter circuit 15, so as to drive an induction motor load 16.

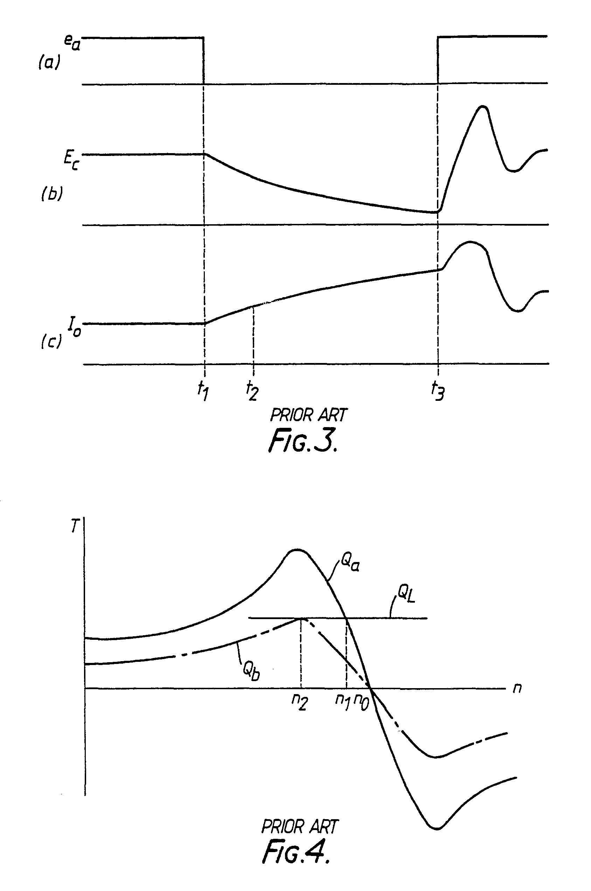

Figure 2 illustrates the main circuit of Figure 1 and the control circuit thereof. In Figure 2, a voltage controlled oscillator 22 connected to a frequency reference setter 21 produces pulses with a frequency of six times the inverter output frequency f in accordance with a frequency voltage established by the reference setter 21. The output of the oscillator 22 is divided into the reference frequency f by a frequency divider 23, which supplies the inverter circuit 15. The frequency reference fr is also fed as a voltage reference into a comparator 24 where it is compared with a voltage feedback signal derived from a voltage detection circuit 25. This circuit comprises a transformer that detects the inverter output voltage and a rectifier that rectifies the thus detected voltage. The output from the comparator 24 is fed into a voltage control circuit 26 in which the thus compared result, i.e. an error voltage, is amplified, so as to be fed as a phase reference into a phase control circuit 28. The phase control circuit 28 produces gate pulses according to the phase reference in synchronism with a phase signal derived from a transformer 27 that detects a voltage phase of the AC power source 11, so as to feed the same to the respective thyristor gates that constitute the rectifier circuit 12. An instantaneous interruption detector 29 connected to the transformer detects any instantaneous interruption of the AC power source 11 and, if the instantaneous interruption continues longer than a certain specified time, a signal is produced which is supplied to the frequency divider 23 and the phase control circuit 18, so as to stop the operation of the voltage type inverter.

In Figure 3, (a) represents an instantaneous interruption signal $e_a$ detected by the instantaneous detector 29, (b) a charging voltage $E_c$ which is being charged by the smoothing capacitor 14, and (c) an inverter output current $I_o$ which is an AC current that flows into the induction motor from the inverter circuit 15 represented by a DC level, respectively.

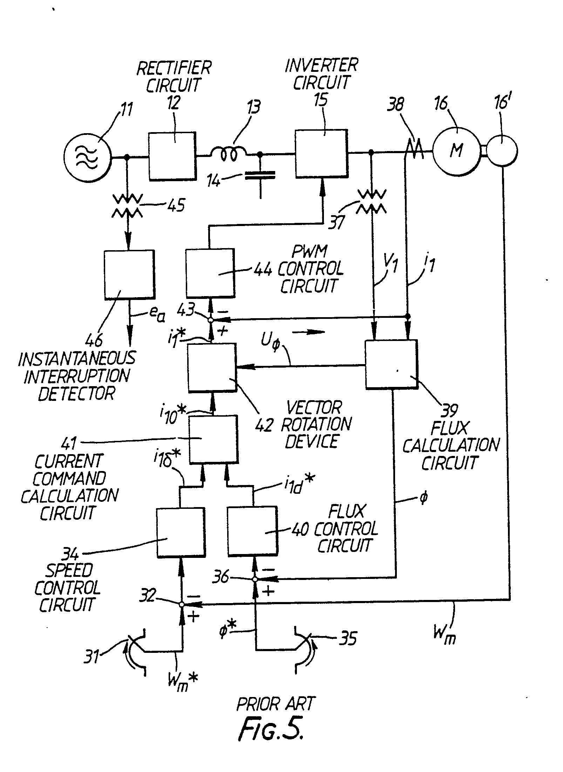

In Figure 4, the curve $q_a$ represents a speed-torque characteristic in the case of normal operation, the curve $Q_b$ a speed-torque characteristic in the state of instantaneous interruption, and the curve $Q_L$ a load-torque characteristic of the induction motor 16, respectively. Assuming that the induction motor 16 is rotating at a speed of $n_1$ at a time $t_1$ when an instantaneous interruption occurs, the charging voltage $E_c$ commences to decrease from the time $t_1$. In this case, should a control be performed such that the inverter output frequency f corresponding to a synchronous speed $n_o$ is maintained constant, the inverter output current $I_o$ increases in order to obtain the same level output as previous to the instantaneous interruption, so that the charging voltage $E_c$ decreases more significantly. At a time $t_2$, the induction motor 16 rotates with the speed-torque characteristic of the curve $Q_b$ and, after the speed of the induction motor 16 is reduced to a speed $n_2$ that corresponds to the maximum torque, the induction motor 16 loses speed, and its speed decreases in free-run state. Should the power be restored at a time $t_3$ which is in the above-described state, a surge current appears and the smoothing capacitor 14 is overcharged because the charging voltage $E_c$ of the smoothing capacitor 14 has been considerably reduced. In addition to these disadvantages, there is another disadvantage in that, because the ratio of voltage and frequency (hereinafter referred to as v/f) of the induction motor 16 is reduced because of its reduced speed, and the flux thereof is not sufficiently established because of its reduced speed, when an attempt is made to operate with the v/f ratio, which is the same as that previous to the instantaneous interruption, a surge current appears, with the result that both the main circuit and the control circuit become unstable.

Further to the aforementioned control system, there is also a method in which, upon detection of an instantaneous interruption, the inverter output frequency is instantaneously reduced, so as to establish a regenerative state, whereby the charging voltage $E_c$ of the smoothing capacitor 14 and the flux of the induction motor 26 are ensured. However, in this method, there still exists the disadvantage that the speed

2

of the induction motor 16 reduces more rapidly than the natural deceleration during the period of instantaneous interruption.

There has also been provided a control circuit, as shown in Figure 5, that can continue to provide a stable drive of an AC motor upon occurrence of an instantaneous interruption. In Figure 5, a speed reference $W_m{}^*$, established by a setter 31, is fed into a comparator 32, so as to be compared with a speed feedback signal $W_m$ from a speed detector 16'. A speed control circuit 34 receives the thus compared result and amplifies the same, so as to produce a torque current component command $i_q{}^*$. A flux reference $\phi^*$, established by a setter 35, is fed into a comparator 36, so as to be compared with a flux feedback signal $\phi$. The flux feedback signal $\phi$ is produced as a result of a calculation performed within a flux calculation circuit 39, which receives a terminal voltage $V_1$ of the induction motor 16 derived through a transformer 37, and a terminal current $i_1$ of the induction motor 16 derived through a current transformer 38, so as to perform the calculation.

A flux control circuit 40 receives the compared result from the comparator 36, which is an error signal, and amplifies the same, so as to produce an exciting current component command $i_1 d^*$.

A current command calculation circuit 41 performs a calculation of

$$|i_1 o^*| = \sqrt{i_1 q^{*2} + i_1 d^{*2}}$$

$$\angle\, i_1 o^* = \tan^{-1}(i_1 q^*/i_1 d^*)$$

so as to produce a current command $i_1 o^*$. In addition, a vector rotation device 42 performs a calculation of

$$|i_1{}^*| = |i_1 o^*|$$

$$\angle\, i_1{}^* = \angle\, i_1 o^* + \angle\, U\phi$$

so as to produce an AC current command $i_1{}^*$. Here, the vector rotation device 42 receives a flux phase $\vec{U}\phi$ from the flux calculation circuit 39. A comparator 43 receives the AC current command $i_1{}^*$, so as to be compared with an actual current signal $i_1$. The thus compared result is fed into a PWM (pulse width modulation) control circuit 44, so as to produce ON-OFF signals which, in turn, are fed into the respective gate turn off thyristors within the inverter 15. On the other hand, an instantaneous interruption detection circuit 46 receives a voltage signal of the AC power source 11 through a potential transformer 45, so as to detect whether the received voltage signal exists above or below a specified instantaneous interruption level and, when detected as an instantaneous interruption, then produces an instantaneous interruption signal $e_a$.

In general, the control circuit of Figure 5 has not sufficiently utilised the instantaneous interruption signal $e_a$. Namely, upon occurrence of instantaneous interruption, it is uncertain how long the operation of the system can continue by the accumulated charge on the smoothing capacitor 14, so that, when the period of an instantaneous interruption exceeds a specified period, the operation of the system is usually stopped. This is also because of the configuration of the control circuit in Figure 5, which functions in such a manner of so-called vector control based on an instantaneous value control and, should an attempt be made to successfully achieve a vector operation, even upon occurrence of an instantaneous interruption, the control circuit would be extremely complicated. This has been another disadvantage hitherto.

An object of this invention is to provide a power converter in which, during the period of an instantaneous interruption, the AC power supplied from the power converter to an AC motor is controlled, whereby there exists no large surge current, even upon recovery of the power, thus, both the main circuit and control circuit thereof can be prevented from becoming unstable.

To achieve the above-described object according to the present invention, there is provided a power converter having a conversion circuit connectible to an AC power source for converting AC power therefrom into DC power, a filter circuit comprising at least a capacitor connected to the conversion circuit, and an inverter circuit connected to the filter circuit for inversely converting the DC power into a second AC power, so as to drive an AC motor, the power converter comprising calculation means for calculating a torque current component of the AC motor from a three-phase terminal voltage and a three-phase terminal current of the AC motor; detection means for detecting occurrence of an instantaneous interruption in the AC power source; command means for commanding a frequency of said second AC power to be fed into the AC motor; control means for controlling the terminal voltage of the AC motor in accordance with a signal relating to an output signal of said command means and a reference value; and first compensation means for compensating the output signal of said command means so that the output signal of said calculation means is adjusted to be substantially zero in response to an output signal of said detection means.

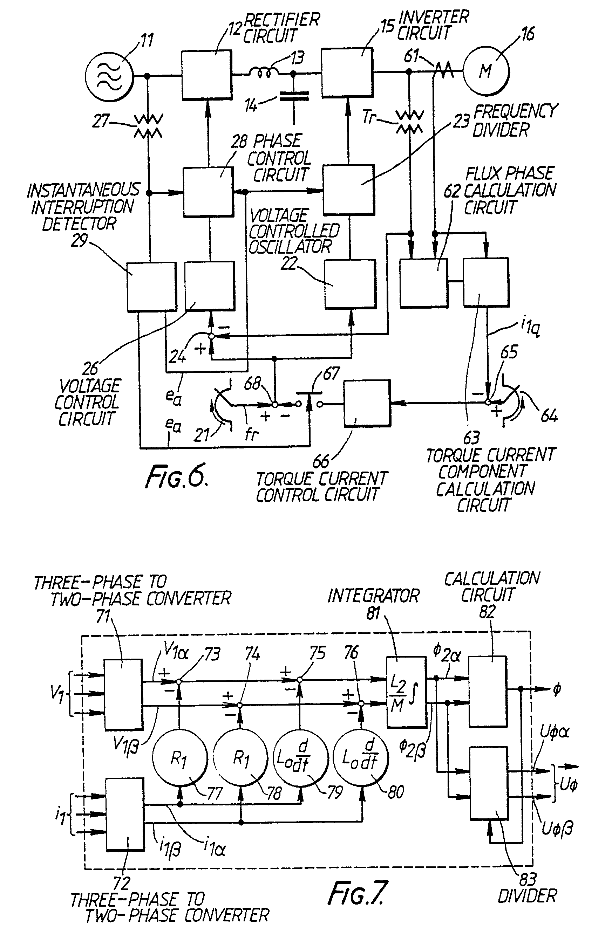

In order that the invention may be more readily understood, it will now be described, by way of example only, with reference to Figures 6 to 16 of the accompanying drawings, in which:—

Figure 6 is a block diagram illustrating one embodiment of the present invention;

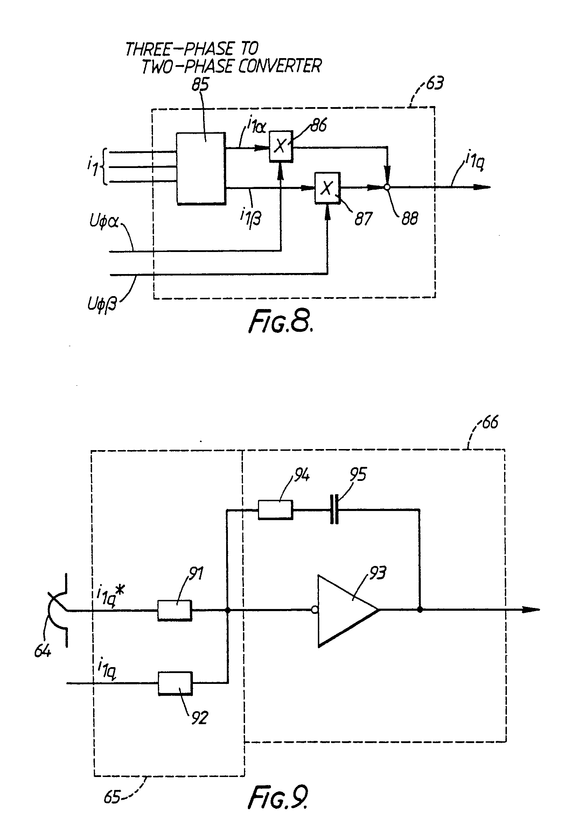

Figure 7 is a block diagram illustrating a specific example of a flux phase calculation circuit shown in Figure 6;

EP 0 165 020 B1

Figure 8 is a block diagram illustrating one embodiment of a torque current component calculation circuit shown in Figure 6;

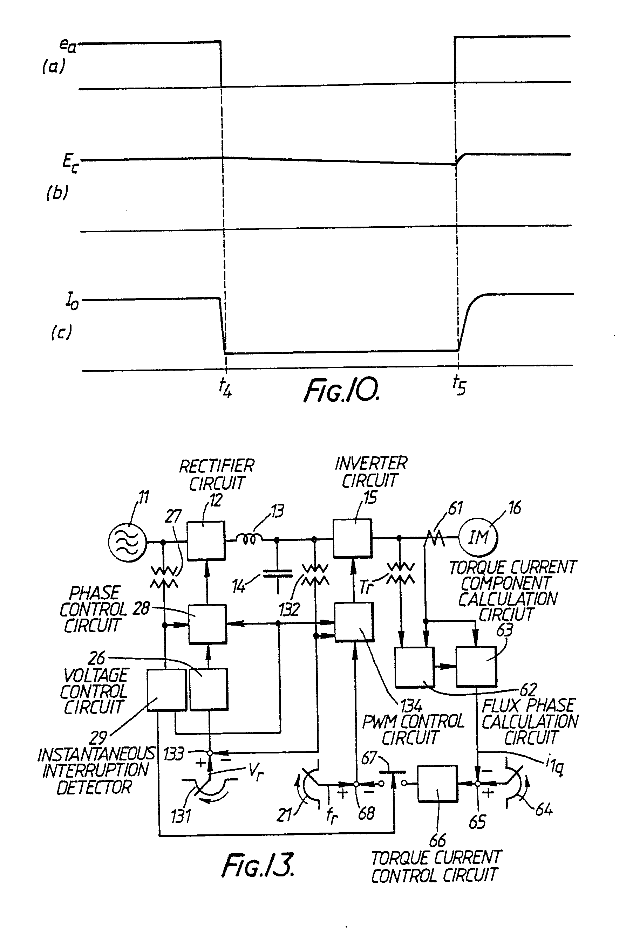

Figure 9 is a diagram illustrating a specific circuit of a torque current control circuit shown in Figure 6;

Figure 10 is a timing chart which explains the operation of the power converter according to the present invention upon occurrence of an instantaneous interruption;

Figure 11 is a diagram illustrating transient speed-torque characteristics of the power converter according to the present invention upon occurrence of an instantaneous interruption; and

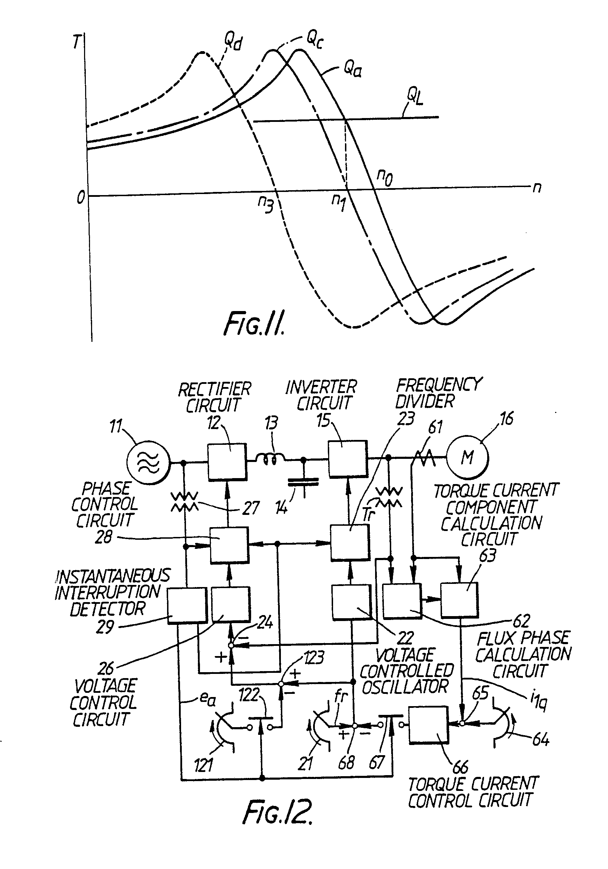

Figures 12 to 16 are block diagrams, each illustrating other embodiments of the present invention.

In Figure 6, portions which differ from the conventional power converter of Figure 2 are such that there is provided a flux phase calculation circuit 62 that receives the terminal voltage of the induction motor 16 through a transformer Tr and the load current of the induction motor 16 through a current transformer 61, so as to produce a flux phase at a certain instant; that there is provided a torque current component calculation circuit 63 that receives an output signal of the flux phase calculation circuit 62 and the load current signal derived from the current transformer 61, so as to produce a torque current component $i_1q$; that there is a setter 64 that establishes a torque current component which is substantially zero, a comparator 65 that compares the output of the setter 64 with an output of the torque current component calculation circuit 63, and a torque current control circuit 66 that amplifies the output of the comparator 65; and that there is provided a switch 67 that operates in response to an instantaneous interruption signal $e_a$, and an adder 68 that adds an output signal of the torque current control circuit 66 as a compensation signal to a frequency reference fr.

In Figure 7, a terminal voltage $V_1$ of the induction motor 16 received through the transformer Tr and a terminal current $i_1$ received through the current transformer 61 are, respectively, converted into two-phase signals by means of three-phase to two-phase converters 71 and 72, respectively. Here, an instantaneous flux can be obtained from the terminal voltage $V_1$ and the terminal current $i_1$ by performing a calculation of

$$\vec{\phi}_2 = \frac{L_2}{M} \int (\vec{V}_1 - R_1\vec{i}_1 - L_o\frac{d}{dt}\vec{i}_1)dt$$

where
$\vec{\phi}_2$ represents a secondary flux vector,
$\vec{V}_1$ a primary (terminal) voltage vector,
$\vec{i}_1$ a primary (terminal) current vector,
$L_2$ a secondary self inductance,
M a mutual inductance,
$R_1$ a primary resistance, and
$L_o$ a leakage inductance, respectively.
Adders 73 to 76 together with multipliers 77 to 80 perform a calculation of

$$\vec{V}_1 - R_1\vec{i}_1 - L_o\frac{d}{dt}\vec{i}_1$$

and an integrator 81 performs a calculation of

$$\frac{L_2}{M} \int$$

A calculation circuit 82 performs a calculation of

$$\phi_2 = \sqrt{\phi_{2\alpha}^2 + \phi_{2\beta}^2}$$

so as to obtain a flux quantity.
A divider 83 performs a calculation of

$$U_{\phi\alpha} = \frac{\phi_{2\alpha}}{\phi_2}, \ U_{\phi\beta} = \frac{\phi_{2\beta}}{\phi_2}$$

so as to produce unit vector components $U_{\phi\alpha}$ and $U_{\phi\beta}$ that represent the respective instantaneous flux phases.

In Figure 8, the terminal current $i_1$ is converted into a two-phase signal by a three-phase to two-phase converter 85 and, thereafter, multipliers 86 and 87 together with an adder 88 perform a calculation, so as to produce a torque current component $i_1q$ which is in a relationship perpendicular to a secondary flux torque.

4

In Figure 9, a torque current reference $i_1q^*$ established by the setter 64 and an output $i_1q$ of the torque current component calculation circuit 63 are fed through resistors 91 and 92 into the torque current control circuit 66, which is constituted by an operational amplifier 93 that receives a difference between the torque current reference $i_1q^*$ and the torque current component $i_1q$ and a series-connected feedback component of a resistor 94 and a capacitor 95 by which an output of the operational amplifier 93 is fed back. Namely, the torque current control circuit 66 is constituted as a proportion-integration circuit, the output thereof is supplied to one end of the switch 67.

Figure 10 is a diagram illustrating, in the same manner as in Figure 3, an instantaneous interruption signal $e_a$, a charging voltage $E_c$ and an inverter output current $I_o$.

Figure 11 is a diagram illustrating variations in the speed-torque characteristics during the period of an instantaneous interruption.

Should an instantaneous interruption occur at a time $t_4$, frequency is controlled, so as to cause a torque current component to be substantially zero, as shown in the above-described embodiment, so that an inverter output current $I_o$ operates, so as to supply a current of the amount corresponding to an exciting current component of the induction motor 16. This means that, in Figure 11, the characteristic curve $Q_a$ shifts to the characteristic curve $Q_c$, then the induction motor 16 generates no torque so that its speed decreases in natural deceleration. Along with this deceleration, the characteristic curve $Q_c$ shifts to the characteristic curve $Q_d$. The power factor of the exciting current is substantially zero so that, even when only the exciting current component is supplied during the period of instantaneous interruption, the power to be lost during this period is substantially zero. This is because the power of only the amount corresponding to the power loss developed within the circuit due to the flow of the exciting current component is lost. Therefore, the decrease of the charging voltage $E_c$ during the instantaneous interruption can be reduced considerably. This means that the surge current upon recovery of the power can be suppressed to a considerably lower value and this also prevents the smoothing capacitor 14 from being overcharged.

In addition, even within the period of the instantaneous interruption, a normal value of v/f ratio is maintained so that an exciting current of a specified amount continues to flow so that, even upon recovery of the power, both the main circuit and the control circuit never fall into unstable operation.

Further, the induction motor 16 never experiences a regenerative state during the period of an instnataneous interruption. Consequently, even when re-accelerating after recovery of the power, the time required for the induction motor 16 to accelerate can be minimised.

Next, Figure 12 shows another embodiment of the present invention, which differs from the embodiment of Figure 6 in that a voltage compensation signal, established by a voltage compensation setter 121, is fed in response to a signal $e_a$ that represents the period of instantaneous interruption into an adder 123 through a switch 122, so as to be added to a voltage reference signal which is the output of the adder 68.

In the embodiment of Figure 12, besides functions and advantages equivalent to those in the embodiment of Figure 6, such a function can also be performed that the voltage compensation signal is added to the voltage reference signal during the instantaneous interruption. This voltage compensation signal is added, so as to reduce the voltage reference signal, so that the value of v/f ratio during this period is reduced. Thus, the exciting current to be supplied to the induction motor 16 becomes smaller than that in normal operation.

Therefore, the exciting current during the instantaneous interruption becomes smaller so that the power loss caused by flow of the exciting current can be suppressed to a further smaller value. Thus, even in the case when the period of instantaneous interruption becomes longer, by use of this embodiment, the amount of decreasing the charge accumulated on the smoothing capacitor 14 is reduced. This is significantly more effective in terms of suppression of surge current compared to the embodiment of Figure 6.

In Figure 7, one embodiment of the flux phase calculation circuit has been illustrated. However, it is obvious that, even when the flux phase is detected or calculated by use of a method other than this, the function thereof can similarly be achieved. For example, there can be obviously provided such a method that a plurality of flux detectors are installed within the induction motor 16, so as to directly detect the flux thereof, or that the primary current and speed of the induction motor 16 are utilised to calculate the flux thereof.

Furthermore, hereinbefore the description has been made as to one example such that the rectifier circuit 12 is operated in accordance with the voltage control loop and the inverter circuit 15 is operated in accordance with the frequency control loop. However, it is obvious that, even when the rectifier circuit 12 is constituted by a diode pure bridge, and the inverter circuit 15 is caused to perform a voltage control-frequency control, the same function can be similarly achieved.

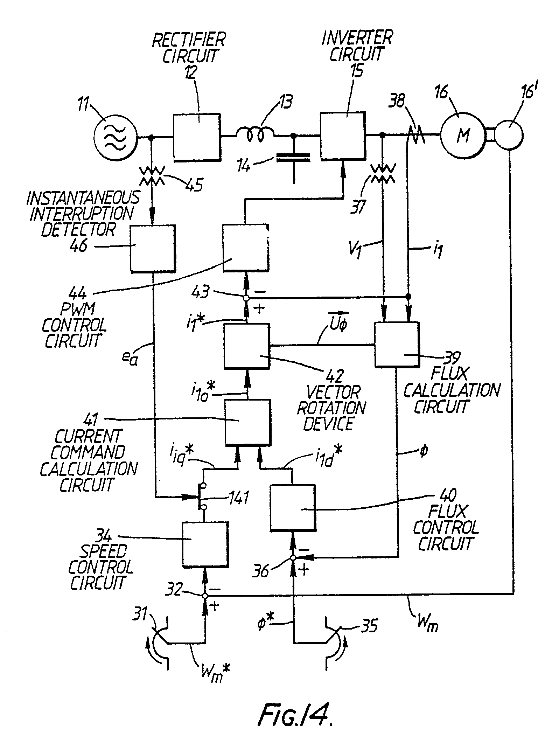

Moreover, even in the case when the rectifier circuit 12 is constituted by an ordinary thyristor bridge, when the rectified DC voltage is so controlled to be constant and the inverter circuit 15 is caused to perform an output voltage-frequency control, there can be provided functions and advantages similar to the case of the diode pure bridge. The embodiment of this case is shown in Figure 13. In Figure 13, a voltage reference Vr, established by a setter 131, is fed into a comparator 133, so as to be compared with a DC voltage feedback signal derived through a DC voltage detector 132, and the thus compared result is amplified by a voltage control circuit 26. The operations thereafter are identical to the aforementioned operations so that the description thereof is omitted.

By virtue of this configuration, the DC voltage which is the output of the rectifier circuit 12 is maintained constant. On the other hand, a frequency reference fr is fed, after a compensation signal is added thereto at an adder 68, into a PWM (pulse width modulation) control circuit 134.

The PWM control circuit 134 also receives a DC voltage signal from a DC voltage detector 132, so as to determine an optimum PWM pattern, and supplies gate pulses to an inverter circuit 15. In this embodiment, advantages similar to the aforementioned embodiments can also be achieved.

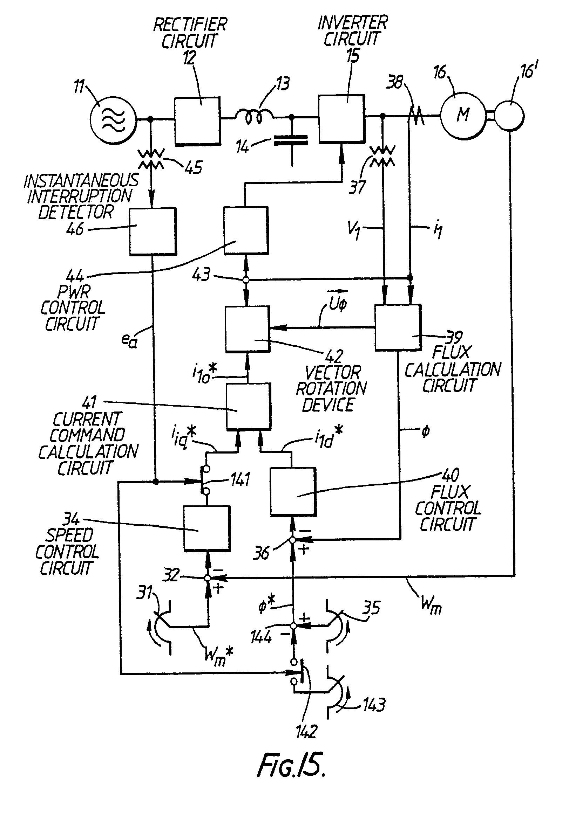

Next, Figure 14 shows another embodiment of the present invention, which differs from the embodiment of Figure 5 in that a switch 141 that operates in response to an instantaneous interruption signal $e_a$ is installed between a speed control circuit 34 and a current command calculation circuit 141. In this configuration, upon occurrence of an instantaneous interruption, the switch 141 is caused to open in response to the instantaneous interruption signal $e_a$. This means that a torque current component command $i_1q=0$ is fed into the current command calculation circuit 41. Thus, a current command $i_1*$ becomes as follows:

$$|i_1*|=|i_1d*|$$

$$\angle i_1*=\tan^{-1}(o/i_1d*)+\angle \vec{U}_\phi$$

$$=\angle \vec{U}_\phi$$

so that a current, with a phase which coincides with a flux phase at this instant and of only the amount corresponding to the exciting current component, is supplied to the induction motor 16. In this case, the induction motor 16 generates no torque so that its speed reduces in a state of natural deceleration. However, during this deceleration, the instantaneous value control can still be continued, thus, its flux remains established being ready for the state where the induction motor 16 can be re-accelerated at any instant. Here, a power factor of the exciting current component is substantially zero. Thus, the amount of decrease of the charge accumulated on a smoothing capacitor 14 caused by flow of the exciting current component corresponds to the power loss developed within the circuit so that this can be suppressed to an extremely small amount.

Therefore, it can be seen that, even during the period of an instantaneous interruption, the induction motor 16 can continue a secured and stable operation with no limitation derived from the power converter side. This is because, only with a condition in which the torque current component command is set to zero ($i_1q*=0$), the instantaneous value control can be performed with no influence, and the operation can be continued in the state with a minimal power loss. Moreover, based on this reason, the amount of decrease of the voltage on the smoothing capacitor 14 can be suppressed to a smaller value so that the surge current, upon recovery of the power, can be kept small, and the induction motor 16 can be accelerated up to its original speed within a minimal time.

In this embodiment, the switch 141 is installed, so as to perform compensation that the torque current component command $i_1q*$ becomes zero upon occurrence of an instantaneous interruption. However, besides this, when there is provided an output limit circuit (not shown), for example, in parallel with a speed control circuit 34 so that the output signal thereof is limited only upon occurrence of an instantaneous interruption, the same advantages as described above can also be achieved.

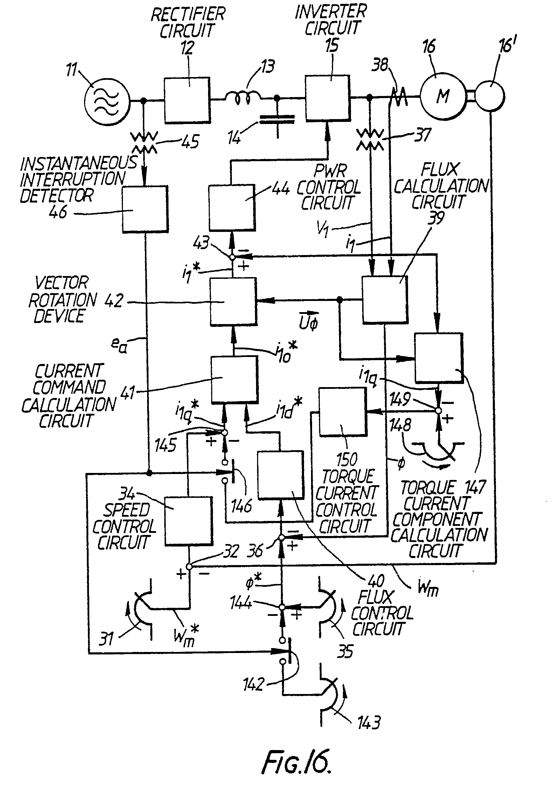

Figure 15 shows another embodiment of the present invention, which differs from the embodiment of Figure 14 in that a switch 142 that operates in response to an instantaneous interruption $e_a$ is additionally provided to add a flux compensation signal, established by a setter 143, to the inherent flux reference at an adder 144, so as to produce a new flux reference $\phi$.

This configuration can perform functions more than that in the embodiment of Figure 14 in that, during the period of an instantaneous interruption, the flux compensation signal is added so as to reduce the flux reference so that an exciting current being supplied to the induction motor 16 during this period becomes smaller than the exciting current in normal operation.

Therefore, the reduction in the exciting current means that the power loss caused by the flow of exciting current can be suppressed to a smaller value. Further, when the period of instantaneous interruption becomes longer, the use of this embodiment becomes more advantageous to achieve a secured and stable operation.

Figure 16 shows another embodiment of the present invention, which differs from the embodiment of Figure 25 in that, instead of the switch 141, an adder 145 is provided to add a torque current component compensation signal derived through a switch 146 to the inherent torque current component command, so as to to produce a torque current component command $i_1q*$.

Here, the torque current component compensation signal is obtained by such a configuration that there is provided a torque current component calculation circuit 147 that receives the current $i_1$ of the induction motor 16 and the flux phase signal $U\phi$ which is the output signal of the flux calculation circuit 39, so as to produce an actual torque current component $i_1q$ of the induction motor 16. The torque current component calculation circuit 147 has the same constitution as that shown in Figure 8. Further, there are provided a comparator 149 that receives a zero torque current component reference, established by a setter 148, and the output signal $i_1q$ of the torque current component calculation circuit 147 to perform a comparison, and a torque current control circuit 150 that receives the thus compared output from the comparator 149 to amplify the same, so as to supply the thus amplified signal to one end of a switch 146.

In the embodiment of Figure 16, the torque current component compensation signal to be fed in response to an instantaneous interruption signal $e_a$ to the torque current component command is produced on the basis of the torque current component $i_1q$ which is actually calculated. Namely, the output signal of the torque current control circuit 150, i.e. the torque current control component compensation signal, is produced such that the actual torque current component $i_1q$ which is obtained as the output signal of the torque current component calculation circuit 147 is controlled, so as to directly be zero.

In the embodiment of Figure 14, the compensation circuit is constituted on the basis of the assumption that the torque current component flows in accordance with the torque current component reference. However, in an actual power converter, there exist cases when the main circuit cannot be regarded as a power amplifier with no lag in response because of fluctuations in the voltage or lags in switching operation. In such cases, a torque current component reference differs from an actual value. Thus, in the embodiment of Figure 16, an actual torque current component is detected and controlled, so as to be zero, by feeding the compensation signal thereto, whereby the non-linearity of the main circuit can also be compensated. Consequently, in this embodiment, a control of higher accuracy can be achieved compared to the embodiments of Figure 14 and Figure 15.

Obviously, numerous additional modifications and varations of the present invention are possible in light of the above teachings. It is, therefore, to be understood that, within the scope of the appended claims, the invention may be practised otherwise than as specifically described herein.

## Claims

1. A power converter having a conversion circuit (12) connectible to an AC power source for converting AC power therefrom into DC power, a filter circuit comprising at least a capacitor (14) connected to the conversion circuit, and an inverter circuit (15) connected to the filter circuit for inversely converting the DC power into a second AC power, so as to drive an AC motor, the power converter comprising calculation means (62, 63) for calculating a torque current component of the AC motor from a three-phase terminal voltage and a three-phase terminal current of the AC motor; detection means (29) for detecting occurrence of an instantaneous interruption in the AC power source; command means (22) for commanding a frequency of said second AC power to be fed into the AC motor; control means (23) for controlling the terminal voltage of the AC motor in ccordance with a signal relating to an output signal of said command means and a reference value; and first compensation means (64—67) for compensating the output signal of said command means so that the output signal of said calculation means (62, 63) is adjusted to be substantially zero in response to an output signal of said detection means (29).

2. The power converter according to Claim 1, characterised in that said calculation means includes a first converter (71) for converting the three-phase terminal voltage of the AC motor into a two-phase voltage; a second converter (72) for converting the three-phase terminal current of the AC motor into a two-phase current; a first calculation circuit (73—81) for calculating a secondary flux vector of the AC motor from the output signals of said first converter and said second converter; a second calculation circuit (82) for calculating an absolute value from the secondary flux vector calculated within said first calculation circuit; a third calculation circuit (83) for calculating an instantaneous flux phase signal from the secondary flux vector and the absolute value thereof derived, respectively, from said first and second calculation circuits; and a fourth calculation circuit (86—88) for calculating a torque current component of the AC motor from the instantaneous flux phase signal calculated within said third calculation circuit and from the two-phase current derived within said second converter.

3. The power converter according to Claim 1, characterised in the provision of second compensation means (121—123) for reducing the reference value of said control means to a certain specified value in response to the output signal of said detection means.

4. A power converter having a conversion circuit connectible to an AC power source for converting AC power therefrom into DC power, a filter circuit comprising at least a capacitor connected to the conversion circuit, and an inverter circuit connected to the filter circuit for inversely converting the DC power into a second AC power, so as to drive an AC motor, the power converter comprising first command means (34) for commanding a first torque current component of the AC motor on the basis of a speed reference of the AC motor and a speed of the AC motor; second command means (40) for commanding an exciting current component of the AC motor on the basis of a flux reference of the AC motor, and a three-phase terminal voltage and a three-phase terminal current of the AC motor; detection means (46) for detecting occurrence of an instantaneous interruption in the AC power source to produce a detection signal; first compensation means (141) for producing a compensated signal, the compensated signal is determined to be said first torque current component when the detection signal is not applied and to be substantially zero when the detection signal is applied; and third command means (41) for commanding an output voltage and a frequency of the inverter circuit on the basis of the compensated signal from said first compensation means and the exciting current component from said second command means.

5. The power converter according to Claim 4, further comprising second compensation means (142—144) for reducing the exciting current component to a certain specified value in response to the detection signal of said detection means.

6. The power converter according to Claim 4, further comprising third compensation means (147—150) for calculating a second torque current component of the AC motor from three-phase terminal voltage and the three-phase terminal current of the AC motor; wherein said first compensation means further includes means (145) for adding the first torque current component and the second torque current component to produce an added signal which is substantially zero; and means for producing said first torque current component as said compensated signal when the detection signal is not applied and said added signal as said compensated signal when said detection signal is applied.

## Patentansprüche

1. Leistungswandler mit einem Wandlerkreis (12), der an eine Wechselspannungsquelle anschließbar ist zur Umwandlung der Wechselspannung in eine Gleichspannung, einem Filterkreis, er wenigstens einen Kondensator (14) aufweist, der mit dem Wandlerkreis verbunden ist, und einem Inverterkreis (15), der mit dem Filterkreis zur Umwandlung der Gleichspannung in eine zweite Wechselspannung verbunden ist, um einen Wechselspannungsmotor anzutreiben, wobei der Leistungswandler eine Recheneinrichtung (62, 63) aufweist zur Berechnung einer Drehmomentstromkomponente des Wechselstromotors aus einer Dreiphasenanschlußspannung und einem Dreiphasenanschlußstrom des Wechselspannungsmotors ferner eine Überwachungseinrichtung (29) zum Nachweis des Auftretens einer augenblicklichen Unterbrechung in der Wechselspannungsquelle, eine Befehlseinrichtung (22) zur Steuerung einer Frequenz der zweiten in den Wechselspannungsmotor einzuspeisenden Wechselspannung, eine Steuereinrichtung (23) zum Steuern der Anschlußspannung des Wechselspannungsmotors entsprechend einem Signal, das mit einem Ausgangssignal der Befehlseinrichtung und einem Bezugswert in Beziehung steht, und eine erste Kompensationseinrichtung (64, 67) zum Kompensieren des Ausgangssignals der Befehlseinrcithung, so daß das Ausgangssignal der Recheneinrichtung (62, 63) im wesentlichen auf Null eingestellt wird bei Zufuhr eines Ausgangssignals der Überwachungseinrichtung (29).

2. Leistungswadler nach Anspruch 1, dadurch gekennzeichnet, daß die Recheneinrichtung einen ersten Konverter (71) zum Umwandeln der Dreiphasenanschlußspannung des Wechselstrommotors in eine Zweiphasenspannung aufweist, sowie einen zweiten Konverter (72) zum Umwandeln des Dreiphasenanschlußstromes des Wechselspannungsmotors in einen Zweiphasenstrom, einen ersten Rechenkreis (73—81) zum Berechnen eines Sekundär-Flußvektors des Wechselspannungsmotors aus den Ausgangssignalen des ersten und des zweiten Konverters, einen zweiten Rechenkreis (82) zum Berechnen eines absoluten Wertes aus dem im ersten Rechenkreis berechneten Sekundär-Flußvektor, einen dritten Rechenkreis (83) zum Berechnen eines momentanen Flußphasensignals aus dem Sekundär-Flußvektor und dem daraus abgeleiteten absoluten Wert aus dem ersten und dem zweiten Rechenkreis, und einen vierten Rechenkreis (86—88) zum Berechnen der Drehmomentstromkomponente des Wechselstrommmotors aus dem momentanen Flußphasensignal, das im dritten Rechenkreis berechnet wurde, und aus dem im zweiten Konverter abgeleiteten Zweiphasenstrom.

3. Leistungswandler nach Anspruch 1, dadurch gekennzeichnet, daß eine zweite Kompensationseinrichtung (121—123) vorgesehen ist zur Reduzierung des Referenzwertes der Steuereinrichtung auf einen bestimmten Spezifizierten Wert bei Zufuhr des Ausgangssignals der Überwachungseinrichtung.

4. Leistungswandler mit einem Wandlerkreis, der an eine Wechselspannungsquelle anschließbar ist zur Umwandlung der Wechselspannung in eine Gleichspannung, einem Filterkreis, der wenigstens einen mit dem Wandlerkreis verbundenen Kondensator aufweist, und einem Inverterkreis, der mit dem Filterkreis verbunden ist zur Umwandlung der Gleichspannung in eine zweite Wechselspannung, um einen Wechselspannungsmotor anzutreiben, wobei der Leistungswandler eine erste Befehlseinrichtung (34) zur Steuerung einer ersten Drehmomentstromkomponente des Wechselspannungsmotors auf der Basis einer Geschwindigkeitsreferenz des Wechselspannungsmotors und einer Geschwindigkeit des Wechselspannungsmotors aufweist, ferner eine zweite Befehlseinrichtung (40) zur Steuerung einer Erregerstromkomponente des Wechselspannungsmotors auf der Basis eines Flußreferenzwertes des Wechselspannungsmotors, einer Dreiphasenanschlußspannung und eines Dreiphasenanschlußstromes des Wechselspannungsmotors, eine Überwachungseinrichtung (46) zum Anzeigen des Auftretens einer momentanen Unterbrechung in der Wechselspannungsquelle, um ein Anzeigesignal zu erzeugen, eine erste Kompensationseinrichtung (141) zur Erzeugung eines kompensierten Signales, das die erste Drehmomentstromkomponente darstellt, wenn das Anzeigesignal nicht anfällt, und das im wesentlichen Null ist, wenn das Anzeigesignal anfällt, eine dritte Befehlseinrichtung (41) zur Steuerung einer Ausgangsspannung und einer Frequenz des Inverterkreises auf der Basis des kompensierten Signales der ersten Kompensationseinrichtung und der Erregerstromkomponente der zweiten Befehlseinrichtung.

5. Leistungswandler nach Anspruch 4, der ferner eine zweite Kompensationseinrichtung (142—144)

8

aufweist zur Reduzierung der Erregerstromkomponente auf einen bestimmten spezifizierten Wert bei Zufuhr des Anzeigesignales der Überwachungseinrichtung.

6. Leistungswandler nach Anspruch 4, der ferner eine dritte Kompensationseinrichtung (147—150) aufweist zur Berechnung einer zweiten Drehmomentstromkomponente des Wechselspannungsmotors aus der Dreiphasenanschlußspannung und dem Dreiphasenanschlußstrom des Wechselspannungsmotors, wobei die erste Kompensationseinrichtung eine Einrichtung (145) aufweist zum Addieren der ersten Drehmomentstromkomponente und der zweiten Drehmomentstromkomponente, um ein Summensignal zu erzeugen, das im wesentlichen Null ist, und eine Einrichtung zum Erzeugen der ersten Drehmomentstromkomponente als das kompensierte Signal, wenn das Anzeigesignal nicht erscheint, und des Summensignales als das kompensierte Signal, wenn das Anzeigesignal angelegt wird.

**Revendications**

1. Un convertisseur d'énergie comportant un circuit de conversion (12) qui peut être connecté à une source d'énergie électrique alternative, pour convertir l'énergie alternative de cette dernière en énergie continue, un circuit de filtre comprenant au moins un condensateur (14) connecté au circuit de conversion, et un circuit onduleur (15) connecté au circuit de filtre pour convertir de façon inverse l'énergie continue en une seconde forme d'énergie alternative, de façon à alimenter un moteur à courant alternatif, le convertisseur d'énergie comprenant des moyens de calcul (62, 63) pour calculer une composante de courant de couple du moteur à courant alternatif, à partir de la tension triphasée aux bornes et du courant triphasé aux bornes du moteur à courant alternatif; des moyens de détection (29) pour détecter l'apparition d'une interruption instantanée de la source d'énergie électrique alternative; des moyens de génération d'ordre (22) destinés à produire un ordre de fréquence pour la seconde forme d'énergie électrique alternative à appliquer au moteur à courant alternatif; des moyens de commande (23) pour commander la tension aux bornes du moteur à courant alternatif, conformément à un signal lié à un signal de sortie des moyens de génération d'ordre et à une valeur de référence; et des premiers moyens de compensation (64—67) pour compenser le signal de sortie des moyens de génération d'ordre, de façon que le signal de sortie des moyens de calcul (62, 63) soit ajusté de façon à être pratiquement égal à zéro sous l'effet d'un signal de sortie des moyens de détection (29).

2. Le convertisseur d'énergie selon la revendication 1, caractérisé en ce que les moyens de calcul comprennent un premier convertisseur (71) destiné à convertir la tension triphasée aux bornes du moteur à courant alternatif en une tension biphasée; un second convertisseur (72) destiné à convertir le courant triphasé aux bornes du moteur à courant alternatif en un courant biphasé; un premier circuit de calcul (73—81) pour calculer un vecteur de flux secondaire du moteur à courant alternatif, à partir des signaux de sortie du premier convertisseur et du second convertisseur; un second circuit de calcul (82) pour calculer une valeur absolue à partir du vecteur de flux secondaire qui est calculé dans le premier circuit de calcul; un troisième circuit de calcul (83) pour calculer un signal de phase de flux instantané à partir du vecteur de flux secondaire et de la valeur absolue correspondante, que fournissent respectivement les premier et second circuits de calcul; et un quatrième circuit de calcul (86—88) pour calculer une composante de courant de couple du moteur à courant alternatif, à partir du signal de phase de flux instantané qui est calculé par le troisième circuit de calcul, et à partir du courant biphasé qui est élaboré dans le second convertisseur.

3. Le convertisseur d'énergie selon la revendication 1, caractérisé par l'existence de seconds moyens de compensation (121—123) qui sont destinés à réduire à une certaine valeur spécifiée la valeur de référence des moyens de commande, sous la dépendance du signal de sortie des moyens de détection.

4. Un convertisseur d'énergie comportant un circuit de conversion qui peut être connecté à une source d'énergie électrique alternative, pour convertir de l'énergie alternative de cette source en énergie continue, un circuit de filtre comprenant un moins un condensateur connecté au circuit de conversion, et un circuit onduleur qui est connecté au circuit de filtre pour convertir de façon inverse l'énergie continue en une seconde forme d'énergie alternative, afin d'alimenter un moteur à courant alternatif, le convertisseur d'énergie comprenant des premiers moyens de génération d'ordre (34) destinés à définir un ordre pour une première composante de courant de couple du moteur à courant alternatif, sur la base d'une référence de vitesse du moteur à courant alternatif et de la vitesse du moteur à courant alternatif; des seconds moyens de génération d'ordre (40) destinés à définir un ordre pour une composante du courant d'excitation du moteur à courant alternatif, sur la base d'une référence de flux du moteur à courant alternatif, et d'une tension triphasée aux bornes et d'un courant triphasé aux bornes du moteur à courant alternatif; des moyens de détection (46) destinés à détecter l'apparition d'une interruption instantanée dans la source d'énergie électrique alternative, pour produire un signal de détection; des premiers moyens de compensation (141) pour produire un signal compense, le signal compensé étant déterminé de façon à être égal à la première composante de courant de couple lorsque le signal de détection n'est pas applique, et à être pratiquement égal à zéro lorsque le signal de détection est appliqué; et des troisièmes moyens de génération d'ordre (41) qui sont destinés à définir un ordre pour une tension de sortie et une fréquence du circuit onduleur, sur la base du signal compensé qui provient des premiers moyens de compensation, et de la composante de courant d'excitation qui provient des seconds moyens de génération d'ordre.

5. Le convertisseur d'énergie selon la revendication 4, comprenant en outre des seconds moyens de compensation (142—144) qui sont destinés à réduire à une certaine valeur spécifiée la composante de courant d'excitation, sous la dépendance du signal de détection des moyens de détection.

6. Le convertisseur d'énergie selon la revendication 4, comprenant en outre des troisièmes moyens de compensation (147—150) pour calculer une seconde composante de courant de couple du moteur à courant alternatif, à partir de la tension triphasée aux bornes et du courant triphasé aux bornes du moteur à courant alternatif; dans lequel les premiers moyens de compensation comprennent en outre des moyens (145) pour additionner la première composante de courant de couple et la seconde composante de courant de couple, afin de produire un signal additionné qui est pratiquement égale à zéro; et des moyens pour fournir la première composante de courant de couple en tant que signal compensé, lorsque le signal de détection n'est pas appliqué, et pour fournir le signal additionné et tant que signal compensé lorsque le signal de détection est appliqué.

PRIOR ART
Fig.1.

FORWARD
CONVERSION
CIRCUIT
12

INVERTER
CIRCUIT
15

PHASE
CONTROL
CIRCUIT

FREQUENCY
DIVIDER

INSTANTANEOUS
INTERRUPTION
DETECTOR

VOLTAGE
CONTROL
CIRCUIT

VOLTAGE
CONTROLLED
OSCILLATOR

PRIOR ART
Fig.2.

1

PRIOR ART

FIG.3.

PRIOR ART

FIG.4.

2

RECTIFIER CIRCUIT

INVERTER CIRCUIT

PWM CONTROL CIRCUIT 44

INSTANTANEOUS INTERRUPTION DETECTOR 46

VECTOR ROTATION DEVICE 42

FLUX CALCULATION CIRCUIT 39

CURRENT COMMAND CALCULATION CIRCUIT 41

SPEED CONTROL CIRCUIT 34

FLUX CONTROL CIRCUIT 40

PRIOR ART

**Fig.5.**

Fig.6.

Fig.7.

THREE-PHASE TO
TWO-PHASE CONVERTER

FIG.8.

FIG.9.

**Fig.10.**

**Fig.13.**

Fig.11.

Fig.12.

Fig.14.

Fig.15.

FIG.16.